# EUROPEAN PATENT SPECIFICATION

(11) **EP 2 734 007 B1**
(45) Date of publication and mention of the grant of the patent: **21.09.2016**
(21) Application number: 12007701.1
(22) Date of filing: 14.11.2012
(51) Int. Cl.: H05B 3/04, H05B 3/24, B60H 1/22

(54) **Electrical heating device and equipment with pluggable heating module**
Elektroheizvorrichtung und Ausrüstung mit Steckheizmodul
Dispositif de chauffage électrique et équipement muni d'un module de chauffage enfichable

(43) Date of publication of application: 21.05.2014
(73) Proprietor: Betacera Inc., New Taipei City (TW)
(72) Inventor: Wei, Chih-Chang, New Taipei City (TW); Habata, Etsuro, New Taipei City (TW)
(74) Representative: Ter Meer Steinmeister & Partner

(56) References cited:
- EP-A1- 1 872 986
- EP-A1- 2 353 898
- EP-A1- 2 388 034
- WO-A1-2011/016763

## Description

### 1. Technical Field

The present invention relates to an electrical heating equipment, especially to an electrical heating device with pluggable heating module.

### 2. Related Art

By the trend of energy saving and carbon emission reducing, the electric automobile will gradually replace the traditional one. The heat of the air conditioning of the traditional automobile is provided by the cooling water circulating the engine; however, the electric automobile can not be operated in the same way because the electric automobile is not driven by the engine. Therefore, an electrical heating device is developed to heat the circulating liquid for the air conditioning of the electric automobile.

The conventional electrical heating device includes a box body and a heating module. The box body is provided with an accommodating space, and one side of the box body is provided with a water inlet and a water outlet. The heating module connects and fixes at one side of the box body, and the liquid is filled in the accommodating space. When in use, the heat generated from the heating module will be conducted to the box body, and the heat exchange will take place between the inner wall of box body and the liquid of the accommodating space, thereby achieving the goal of heating the liquid.

However, the conventional electrical heating device has the following drawbacks. First, the heating module heats the liquid by transferring the heat to the box body, and the box body will further exchange the heat with the liquid. Since the heating process is indirectly, the heating effect is not good enough. Second, the heating module is directly fixed to one side of the box body. If the heating module is damaged or not working properly, the whole electrical heating device is always replaced since assembling/ disassembling the components of the heating module is too complicated, which results in waste of the cost.

WO 2011/016763 A1 discloses an electrical heating device for vehicles. The electrical heating device including a pluggable heating module comprises a container having an accommodation space for the liquid contained therein, which is provided with an opening communicating the accommodation space.. A heating plate comprising positive temperature coefficient (PCT) heating elements can be inserted in the opening such that the liquid flows around the heating plate in the ring shaped chamber formed between the heating plate and the inner side of the container.

EP 2 388 034 A1 deals with a method for treating part of the human body with steam and vaporizer for applying steam to a part of the human body. An evaporator used in the vaporizer is composed of two covers and two aluminum block parts having an PTC heating element disposed there-between. Each aluminum block part exhibit on the outside a meandering channel extending over the longitudinal extension of the respective aluminum block part.

### BRIEF SUMMARY

It is an object of the present invention to provide an electric heating device and electrical heating equipment having an improved liquid heating effect.

This object is solved by the electric heating device and electrical heating equipment according to the independent claims.

A pluggable heating module can be advantageously assembled with the box body, and the heating module can be replaced or repaired when the heating module is damaged or not working properly, thereby saving time for maintaining the electrical heating device.

Advantageously, a heat conducting component of the heating module directly contacts and heats the liquid of the accommodation space to improve the liquid heating effect of the electrical heating device.

An electrical heating device having pluggable heating modules for heating liquid comprises a box body and a heating module. The box body has an accommodation space for accommodating the liquid, and the box body which is provided with a slot for communicating the accommodation space. The heating module is received in the slot in a pluggable way and separates the accommodation space into a first chamber and a second chamber. The heating module includes a positive temperature coefficient (PTC) heating component and a heat conducting component covering the outside of the PTC heating component.

Another electrical heating device having pluggable heating modules comprises a liquid supply, a box body, and a heating module. The liquid supply includes a liquid, a water pump, a liquid inlet pipe and a liquid outlet pipe connecting to the water pump. The box body has an accommodation space for accommodating the liquid, the box body is provided with a slot, a water inlet and a water outlet communicating the accommodation space. The water inlet communicates with the liquid inlet pipe, and the water outlet communicates with the liquid outlet pipe. The heating module inserting into the slot in a pluggable way and separates the accommodation space into a first chamber and a second chamber, and the water inlet and the water outlet communicate the first chamber and the second chamber, respectively. The heating module includes a PTC heating component and a heat conducting component covering the outside of the PTC heating component.

The present invention has the advantages as follows. First, by the electric conductive feature of the heat conducting glue, the efficiency of the electricity conduction from each electrode plate to the PTC heating unit can be improved, and thus enhances the heat generating effect of the PTC heating unit. Besides, by the heat conduction feature of the heat conducting glue and the insulation heat conducting glue, the heat generated by the PTC heating unit can be conducted to the heat conducting component more efficiently, and the liquid heating effect of the electrical heating device can be better. Second, by the insulation feature of the insulation heat conducting glue and the insulation heat conducting plate, the electric leakage from each electrode plate to the heat conducting component can be prevented. Third, by utilizing the fluid passages formed in the first chamber and the second chamber by each convex rib of the upper cover plate and the lower cover plate, respectively, the flowing distance that the liquid flows into or flows out the first chamber and the second chamber can be increased. By doing so, the heating module has more heating time for the liquid, and the heating effect for heating the liquid by the electrical heating device can be improved as well.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 is an assembled perspective view of the first embodiment according to the present invention;
FIG. 2 is an exploded perspective view of the first embodiment according to the present invention;
FIG. 3 is an exploded perspective view of the PTC heating component of the first embodiment according to the present invention;
FIG. 4 is a cross-sectional view of the assembled first embodiment according to the present invention;
FIG. 5 is a schematic view of the partially magnified heating module of the first embodiment according to the present invention;
FIG. 6 is a schematic view of the assembled first embodiment according to the present invention;
FIG. 7 is a first schematic view of the heat-conducting component of the second embodiment according to the present invention;
FIG. 8 is a second schematic view of the heat-conducting component of the second embodiment according to the present invention;
FIG. 9 is a first schematic view of the heat-conducting component of the third embodiment according to the present invention; and
FIG. 10 is a second schematic view of the heat-conducting component of the third embodiment according to the present invention.

### DETAILED DESCRIPTION

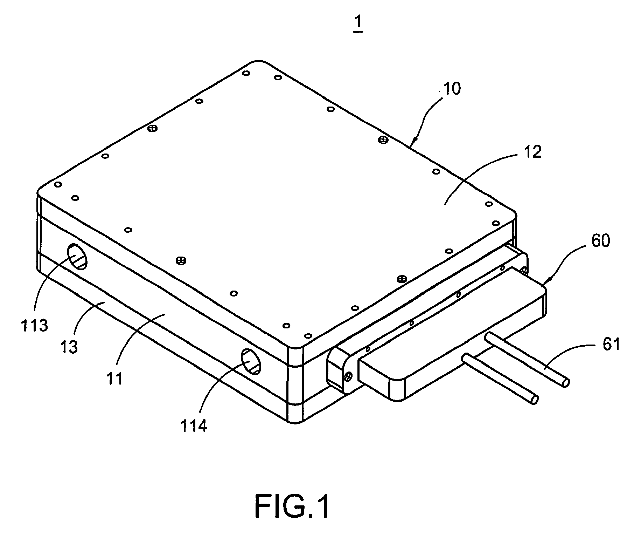

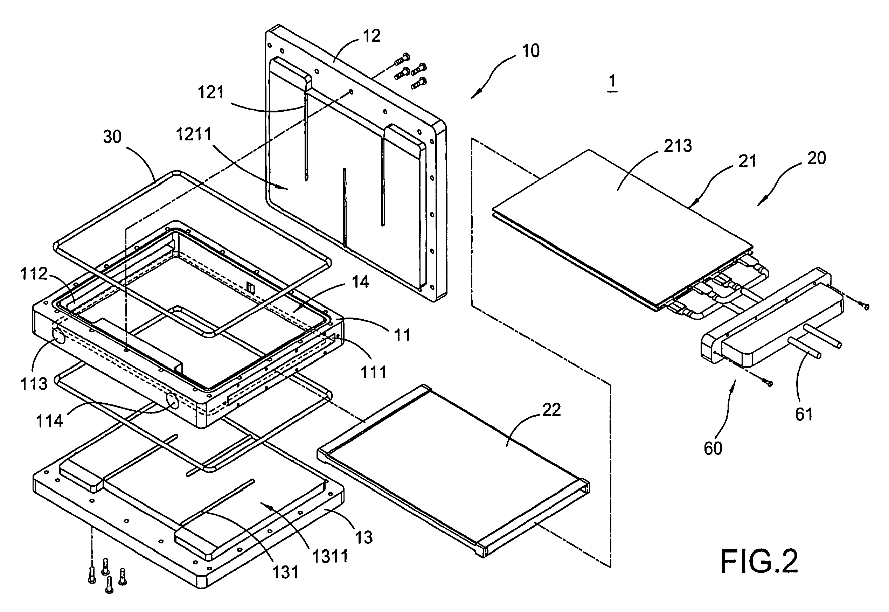

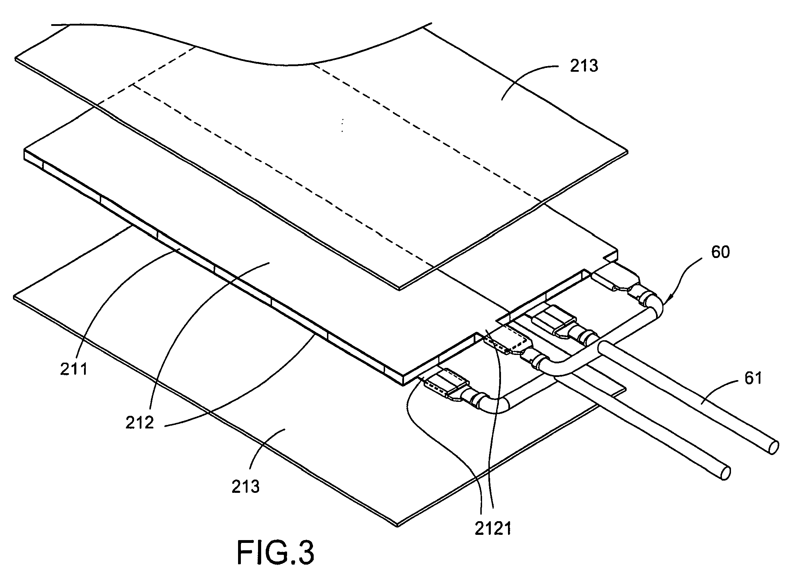

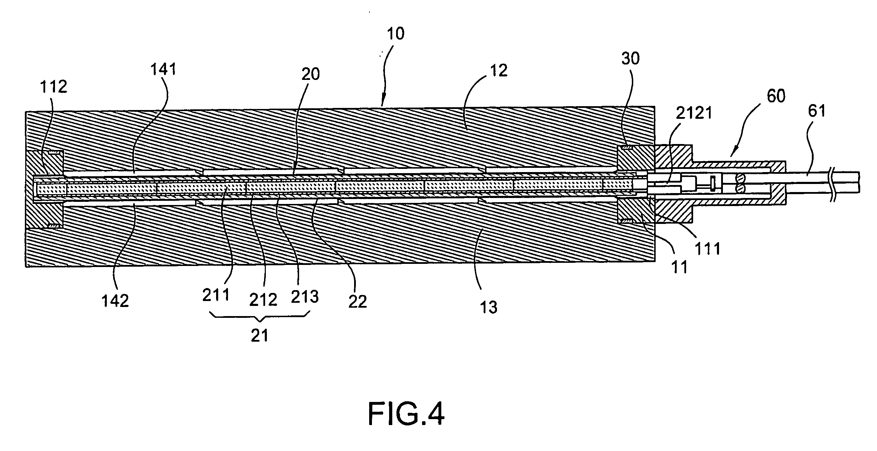

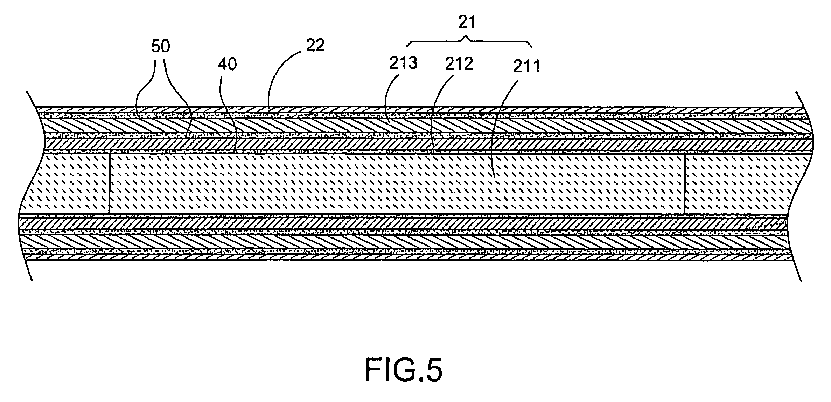

Please refer to FIGS. 1 to 5. The present invention provides an electrical heating equipment 100 with pluggable heating module, which includes an electrical heating device. The electrical heating device includes a box body 10 and a heating module 20.

The box body 10 includes a hollow proper 11, an upper cover plate 12, and a lower cover plate 13. The upper cover plate 12 covers one side of the hollow proper 11, and the lower cover plate 13 covers the other side of the hollow proper 11. An accommodation space 14 is formed by surrounding with the hollow proper 11, the upper cover plate 12, and the lower cover plate 13. One side of the hollow proper 11 is provided with a slot 111 communicating with the accommodation space 14, and the opposite side of the slot 111 of the hollow proper 11 is provided with a fixation trough 112. The heating module 20 is pluggable and inserted into the slot 111 of the hollow proper 11. The end away from the slot 111 of the heating module 20 is fixed inside the fixation trough 112 and separates a first chamber 141 and a second chamber 142 from the accommodation space 14. A side near the slot 111 of the hollow proper 11 is provided with a water inlet 113 and a water outlet 114. The water inlet 113 and the water outlet 114 are connected to the first chamber 141 and the second chamber 142 respectively. A side near the hollow proper 11 of the upper cover plate 12 is formed a plurality of convex ribs 121 which are against an outer surface near the first chamber 141 of a heat conducting component 22, thereby forming a fluid passage 1211 in the first chamber 141. A side near the hollow proper 11 of the lower cover plate 13 is formed a plurality of convex ribs 131 which are against an outer surface near the second chamber 142 of the heat conducting component 22, thereby forming a fluid passage 1311 in the second chamber 142. A waterproof gasket 30 is sandwiched between the upper cover plate 12 and the hollow proper 11, and the lower cover plate 13 and the hollow proper 11, respectively. The hollow proper 11, the upper cover plate 12, and the lower cover plate 13 are made of heat-resistant material, and the waterproof gasket 30 is made of silica gel or rubber.

The heating module 20 includes a PTC heating component 21 and the heat conducting component 22. The heat conducting component 22 covers the outside of the PTC heating component 21. The PTC heating component 21 includes at least a PTC heating unit 211, a pair of electrode plates 212, and a pair of insulation heat conducting plates 213. Each electrode plate 212 connects both sides of the PTC heating unit 211, respectively. One side of each insulation heat conducting plate 213 connects each electrode plate 212, respectively, and the other side of the heat conducting plate 213 connects the inner surface of the heat conducting component 22 respectively. One end of each electrode plate 212 near the slot 111 of the hollow proper 11 is provided with a first electric conductive terminal 2121. The PTC heating unit 211 is made of ceramic material which has positive temperature coefficient. The heat conducting component 22 is made of aluminum or aluminum alloy, and each insulation heat conducting plate 213 is made of alumina.

The electrical heating device 1 further includes a heat conducting glue 40, an insulation heat conducting glue 50, and a connector 60. Each insulation heat conducting plate 213 sticks to each electrode plate 212 by the insulation heat conducting glue 50. Each insulation heat conduction plate 213 sticks to the inner surface of the PTC heating component 22 by the insulation heat conducting glue 50. One side of the connector 60 inserted into the slot 111 and covers the outside of one end of the PTC heating component 21 near the slot 111, and electrically connects to the first electric conductive terminal 2121 of each electrode plate 212. The other side of the connector 60 is provided with a second electric conductive terminal 61. Each insulation heat conducting plate 213 and the insulation heat conducting glue 50 have the features of electrical insulation and heat conduction.

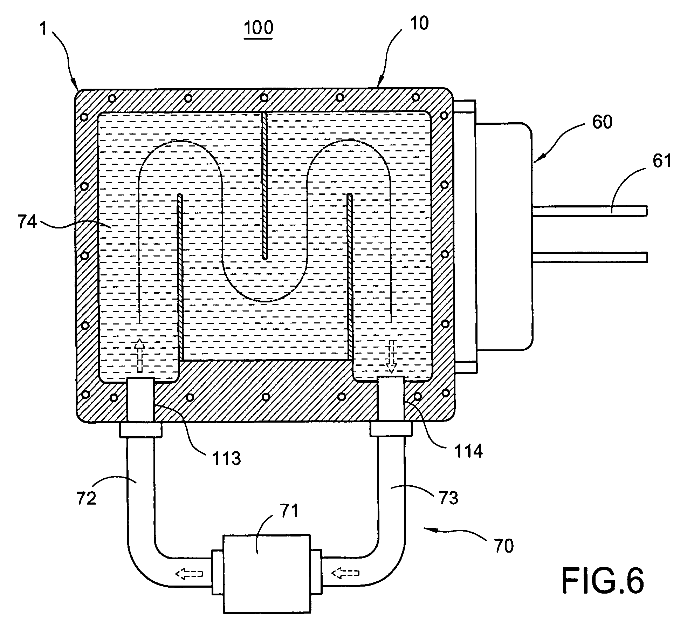

Please refer to FIG. 6, which is a schematic view of the assembled first embodiment according to the present invention. The electrical heating equipment 100 further includes a liquid supply 70. The liquid supply 70 includes a water pump 71, a liquid inlet pipe 72, a liquid outlet pipe 73, and a liquid 74. The liquid inlet pipe 72 communicates with the water pump 71 and the water inlet 113 of the hollow proper 11. The liquid outlet pipe 73 communicates the water pump 71 and the water outlet 114 of the hollow proper 11. The liquid 74 is filled in the first chamber 141 and the second chamber 142 of the box body 10.

When using the electrical heating equipment 100 to heat the liquid 74, the power source is connected to the second electric conductive terminal 61 of the connector 60 to provide the electricity to each electrode plate 212, and each electrode plate 212 can further provide the power to the PTC heating unit 211. Since the PTC heating unit 211 has large resistance value, the electricity provided by the electrode plate 212 can be converted to heat, and the heat generated by the PTC heating unit 211 can be conducted to each electrode plate 212, and further conducted from each electrode plate 212 to each insulation heat conducting plate 213. And then, the heat can be conducted from the heat conducting plate 213 to the heat conducting component 22, and the heat conducting component 22 exchanges the heat with the liquid 74 in the first chamber 141 and the second chamber 142 to achieve the goal of heating the liquid 74. Meanwhile, the liquid 74 will flow into the liquid outlet pipe 73 via the water outlet 113 of the hollow proper 11, and further flows into the water pump 71 from the liquid outlet pipe 73. The water pump 71 inputs the liquid 74 to the liquid inlet pipe 72, and the liquid 74 can flow into the first chamber 141 and the second chamber 142 from the water inlet 113 of the hollow proper 11 via the liquid inlet pipe 72, thereby cyclically heating the liquid 74.

Since the heating module 20 is inserted into the hollow proper 11 in a pluggable way, the heating module 20 can be replaced or repaired when the heating module is damaged or not working properly, thereby saving maintenance time and the cost of replacing the electrical heating device and equipment 1.

Besides, since the outer surface of the heat conducting component 22 directly contacts the liquid 74 of the first chamber 141 and the second chamber 142, the heat conducting component 22 can directly heat the liquid 74, and thus improves the heating effect for the liquid 74. Moreover, by utilizing the fluid passages 1211, 1311 formed in the first chamber 141 and the second chamber 142 by each convex rib 121, 131 of the upper cover plate 12 and the lower cover plate 13, respectively, the flowing distance that the liquid 74 flows into or flows out the first chamber 141 and the second chamber 142 can be increased. By doing so, the heating module 20 has more heating time for the liquid 74, and the heating effect for heating the liquid 74 by the electrical heating device and equipment 1 can be improved as well.

Besides, each insulation heat conducting plate 213 having the electrical insulation feature is sandwiched between the inner surface of each electrode plate 212 and the heat conducting component 22 to prevent the electrical leakage from each electrode plate 212 to the heat conducting component 22. The insulation heat conducting plate 213 is heat-conductive, so the heat conduction from each electrode plate 212 to the heat conducting component 22 can be improved. And also, the insulation heat conducting glue 50 is made of a base material added with the high heat-conductive ceramic powder. The base material can be silica gel, plastic or epoxy resin, and the ceramic powder can be alumina, silicon nitride, aluminum nitride or carborundum, and thus the heat conducting effect from each electrode plate 212 to each insulation heat conducting plate 213, or from each insulation heat conducting plate 213 to the heat conducting component 22, can be even improved.

Besides, the heat conducting glue 40 is made of electric conductive and heat conductive material. The heat conducting glue 40 can be made of silica gel, plastic or rubber added with copper or silver material. Thus, the efficiency of conducting electricity from the electrode plate 212 to the PTC heating unit 211 can be improved, thereby enhancing the effect of generating heat by the PTC heating unit 211, and improving the heat conduction from the PTC heating unit 211 to each electrode plate 212 as well.

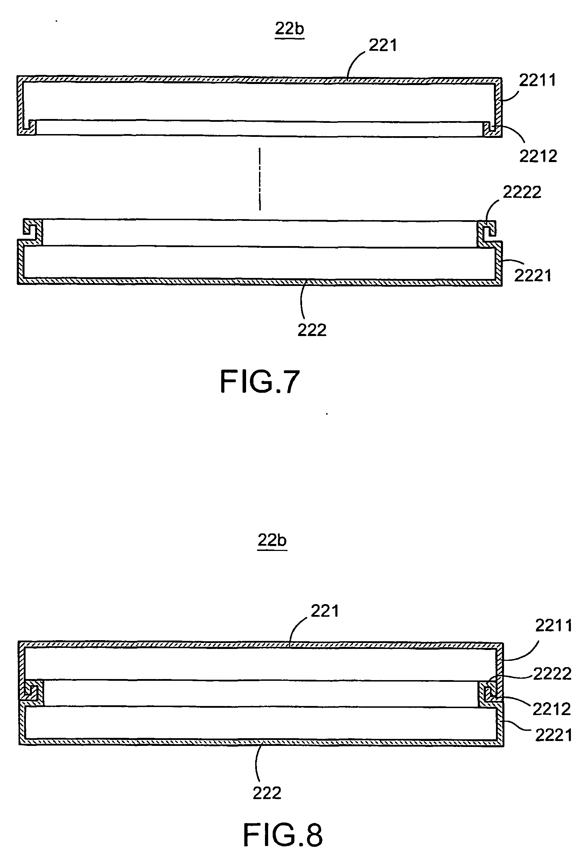

Please refer to FIGS. 7 and 8, which are the first and the second schematic view of the heat-conducting component of the second embodiment according to the present invention. The main difference compared to the previous embodiment is that, the heat conducting component 22 is replaced to heat conducting component 22b. The heat conducting component 22b includes an upper case 221 and a lower case 222. One surface of the upper case 221 forms a U-shaped upper standing wall 2211 constructed by three sides, and one surface of the lower case 222 forms a U-shaped lower standing wall 2221 constructed by three sides. Two opposite sides of the upper standing wall 2211 are formed with an upper hook 2212 bending inward, and two opposite sides of the lower standing wall 2221 are formed with a lower hook 2222 bending outward. Each upper case 221 and each lower case 222 buckles each other by each upper hook 2212 and each lower hook 2222.

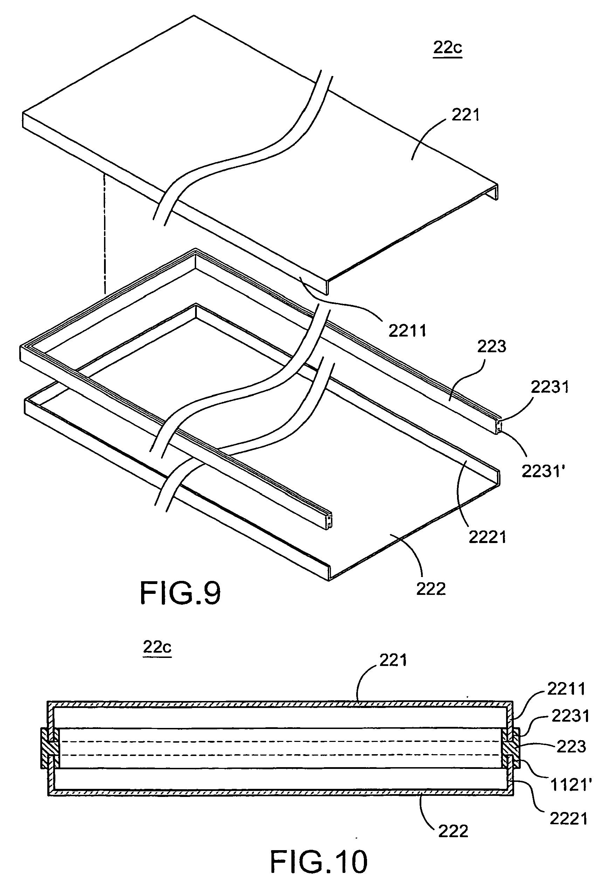

Please refer to FIGS. 9 and 10, which are the first and the second schematic view of the heat-conducting component of the third embodiment according to the present invention. The main difference compared to the previous embodiments is that, the heat conducting component 22 is replaced to heat conducting component 22c. The heat conducting component 22c includes an upper case 221, a lower case 222, and a pair of long strip objects 223. One surface of the upper case 221 forms a U-shaped upper standing wall 2211 constructed by three sides, and one surface of the lower case 222 forms a U-shaped lower standing wall 2221 constructed by three sides. The cross section of the long strip object 223 is formed H-shaped cross section which is formed with an upper track and a lower track for the upper standing wall and the lower standing wall slidably engaged therein, respectively. By this arrangement, the upper case 221 can be connected with the lower case 222.

## Claims

1. An electrical heating device (1) with pluggable heating module for heating liquid (74), comprising:
- a box body (10) having an accommodation space (14) for the liquid (74) contained therein, which is provided with a slot (111) communicating the accommodation space (14); and
- a heating module (20) received in the slot (111) in a pluggable way and separating the accommodation space (14) into a first chamber (141) and a second chamber (142), the heating module (20) including a positive temperature coefficient (PTC) heating component (21) and a heat conducting component (22) covering outside of the PTC heating component (21) wherein the box body (10) includes a hollow proper (11), an upper cover plate (12) and a lower cover plate (13) covering both sides of the hollow proper (11), respectively; the accommodation space (14) is formed by surrounding with the hollow proper (11), the upper cover plate (12), and the lower cover plate (13); and the slot (111) is provided on one side of the hollow proper (11), and
wherein a plurality of convex ribs (121, 131) against an outer surface of the heat conducting component (22) are formed on each side of the upper cover plate (12) and the lower cover plate (13) near the hollow proper (11), the plurality of convex ribs (121, 131) forming a meandering fluid passage (1211) in the first chamber (141) and a meandering fluid passage (1311) in the second chamber (142).

2. The electrical heating device according to claim 1, wherein a waterproof gasket (30) is provided between the upper cover plate (12) and the hollow proper (11), and also between the lower cover plate (13) and the hollow proper (11).

3. The electrical heating device according to claim 1, further comprising an insulation heat conducting glue (50), the PTC heating component (21) being adhered to the heat conducting component (22) via the insulation heat conducting glue (50).

4. The electrical heating device according to claim 3, further comprising a heat conducting glue (40), the PTC heating component (21) including at least one PTC heating unit (211), a pair of electrode plates (212) being adhered to each side of the PTC heating unit (211) via the heat conducting glue (50), and a pair of insulation heat conducting plates (213) being adhered to the pair of the electrode plates (212) via the insulation heat conducting glue (40), respectively.

5. The electrical heating device according to claim 4, further comprising a connector (60) engaged on the slot (111) and covering one end of the PTC heating component (21) near the slot (111), and electrically connecting each of the pair of the electrode plates (212).

6. An electrical heating equipment (100) having pluggable heating module, comprising:
- a liquid supply (70) including liquid (74), a pump (71), an inlet pipe (72) and an outlet pipe (73) connecting to the pump (71); and
- an electrical heating device (1) according to any one of the preceding claims.

7. The electrical heating equipment (100) according to claim 6, wherein the heat conducting component (22b, 22c) includes an upper case (221) and a lower case (222), one surface of the upper case (221) is formed a U-shaped upper standing wall (2211) constructed by three sides, one surface of the lower case (222) is formed a U-shaped lower standing wall (2221) constructed by three sides, and the upper standing wall (2211) connects the lower standing wall (2221).

8. The electrical heating equipment (100) according to claim 7, wherein two opposite sides of the upper standing wall (2211) are formed with an upper hook (2212) bending inward, two opposite sides of the lower standing wall (2221) are formed with a lower hook (2222) bending outward, and each upper hook (2212) and each lower hook (2222) buckles each other.

9. The electrical heating equipment (100) according to claim 7, wherein the heat conducting component (22c) further includes a strip object (223) having a H-shaped cross section formed with an upper track (2231) and a lower track (2231') for the upper standing wall (2211) and the lower standing wall (2221) slidably engaged therein, respectively.

## Patentansprüche

1. Elektrische Heizvorrichtung (1) mit einem einsteckbaren Heizmodul zum Erhitzen von Flüssigkeit (74), wobei die Heizvorrichtung Folgendes umfasst:
- einen Gehäusekörper (10), der einen Aufnahmeraum (14) für die darin enthaltene Flüssigkeit (74) aufweist, der mit einem Spalt (111) versehen ist, der mit dem Aufnahmeraum (14) in Verbindung ist; und
- ein Heizmodul (20), das in dem Spalt (111) einsteckbar aufgenommen wird und den Aufnahmeraum (14) in eine erste Kammer (141) und eine zweite Kammer (142) unterteilt, wobei das Heizmodul (20) ein Heizelement (21) mit positivem Temperaturkoeffizienten (PTC) und ein wärmeleitendes Element (22), das das Äußere des PTC-Heizelements (21) bedeckt, umfasst,
wobei der Gehäusekörper (10) einen hohlen Aufbau (11), eine obere Abdeckplatte (12) und eine untere Abdeckplatte (13), die jeweils beide Seiten des hohlen Aufbaus (11) bedecken, umfasst; wobei der Aufnahmeraum (14) dadurch gebildet ist, dass er von dem hohlen Aufbau (11), der oberen Abdeckplatte (12) und der unteren Abdeckpatte (13) umgeben ist; und wobei der Spalt (111) an einer Seite des hohlen Aufbaus (11) vorgesehen ist, und
wobei mehrere konvexe Rippen (121, 131) an einer äußeren Oberfläche des wärmeleitenden Elements (22) an beiden Seiten der oberen Abdeckplatte (12) und der unteren Abdeckplatte (13) nahe bei dem hohlen Aufbau (11) ausgebildet sind, wobei die mehreren konvexen Rippen (121, 131) einen mäandrierenden Fluiddurchgang (1211) in der ersten Kammer (141) und einen mäandrierenden Fluiddurchgang (1311) in der zweiten Kammer (142) bilden.

2. Elektrische Heizvorrichtung nach Anspruch 1, wobei eine wasserdichte Dichtung (30) zwischen der oberen Abdeckplatte (12) und dem hohlen Aufbau (11) und auch zwischen der unteren Abdeckplatte (13) und dem hohlen Aufbau (11) vorgesehen ist.

3. Elektrische Heizvorrichtung nach Anspruch 1, die ferner einen isolierenden Wärmeleitkleber (50) umfasst, wobei das PTC-Heizelement (21) an dem wärmeleitenden Element (22) mittels des isolierenden Wärmeleitklebers (50) anhaftet.

4. Elektrische Heizvorrichtung nach Anspruch 3, die ferner einen Wärmeleitkleber (40) umfasst, wobei das PTC-Heizelement (21) wenigstens eine PTC-Heizeinheit (211), ein Paar Elektrodenplatten (212), die mittels des Wärmeleitklebers (50) an beiden Seiten der PTC-Heizeinheit (211) anhaften, und ein Paar isolierende wärmeleitende Platten (213), die mittels des isolierenden Wärmeleitklebers (40) jeweils an dem Paar Elektrodenplatten (212) angebracht sind, umfasst.

5. Elektrische Heizvorrichtung nach Anspruch 4, die ferner ein Verbindungselement (60) umfasst, das mit dem Spalt (111) in Eingriff gelangt und ein Ende des PTC-Heizelements (21) nahe am Spalt (111) bedeckt und das Paar Elektrodenplatten (212) elektrisch verbindet.

6. Elektrisches Heizgerät (100), das ein einsteckbares Heizmodul aufweist, wobei das Heizgerät Folgendes umfasst:
- eine Flüssigkeitsversorgung (70), die eine Flüssigkeit (74) enthält, eine Pumpe (71), eine Einlassleitung (72) und eine Auslassleitung (73), die mit der Pumpe (71) verbunden sind; und
- eine elektrische Heizvorrichtung (1) nach einem der vorhergehenden Ansprüche.

7. Elektrisches Heizgerät (100) nach Anspruch 6, wobei das wärmeleitende Element (22b, 22c) ein oberes Gehäuse (221) und ein unteres Gehäuse (222) umfasst, wobei eine Fläche des oberen Gehäuses (221) als eine U-förmige obere stehende Wand (2211) aus-gebildet ist, die durch drei Seiten konstruiert ist, und wobei eine Fläche des unteren Gehäuses (222) als eine U-förmige untere stehende Wand (2221) ausgebildet ist, die durch drei Seiten konstruiert ist, und wobei die obere stehende Wand (2211) mit der unteren stehenden Wand (2221) verbunden ist.

8. Elektrisches Heizgerät (100) nach Anspruch 7, wobei zwei gegenüberliegende Seiten der oberen stehenden Wand (2211) mit einem oberen Haken (2212) ausgebildet sind, der sich nach innen biegt, zwei gegenüberliegende Seiten der unteren stehenden Wand (2221) mit einem unteren Haken (2222) ausgebildet sind, der sich nach außen biegt, und wobei sich jeder obere Haken (2212) und jeder untere Haken (2222) ineinander krümmen.

9. Elektrisches Heizgerät (100) nach Anspruch 7, wobei das wärmeleitende Element (22c) ferner ein Leistenelement (223) umfasst, das einen H-förmigen Querschnitt aufweist und so ausgebildet ist, dass die obere stehende Wand (2211) und die untere stehende Wand (2221) jeweils mit einer oberen Schiene (2231) und einer unteren Schiene (2231') gleitend in Eingriff gelangen.

## Revendications

1. Dispositif de chauffage électrique (1) avec module de chauffage enfichable pour chauffer un liquide (74), comprenant :
- un corps de boîtier (10) ayant un espace de logement (14) pour le liquide (74) contenu dans celui-ci, qui et pourvu d'une fente (111) communicant avec l'espace de logement (14) ; et
- un module de chauffage (20) reçu dans la fente (111) d'une manière enfichable et séparant l'espace de logement (14) en une première chambre (141) et une seconde chambre (142), le module de chauffage (20) incluant un composant de chauffage (21) à coefficient de température positif (PTC) et un composant conducteur de chaleur (22) recouvrant l'extérieur du composant de chauffage PTC (21),
dans lequel le corps de boîtier (10) inclut un réceptacle creux (11), une plaque de couvercle supérieure (12) et une plaque de couvercle inférieure (13) recouvrant les deux côtés du réceptacle creux (11) respectivement ; l'espace de logement (14) est formé en entourant le réceptacle creux (11), la plaque de couvercle supérieure (12) et la plaque de couvercle inférieure (13) ; et la fente (111) est prévue sur un côté du réceptacle creux (11) et
dans lequel une pluralité de nervures convexes (121, 131) contre une surface extérieure du composant conducteur de chaleur (22) sont formées de chaque côté de la plaque de couvercle supérieure (12) et la plaque de couvercle inférieure (13) près du réceptacle creux (11), la pluralité de nervures convexes (121, 131) formant un passage de fluide en méandres (1211) dans la première chambre (141) et un passage de fluide en méandres (1311) dans la seconde chambre (142).

2. Dispositif de chauffage électrique selon la revendication 1, dans lequel un joint d'étanchéité étanche à l'eau (30) est prévu entre la plaque de couvercle supérieure (12) et le réceptacle creux (11) et également entre la plaque de couvercle inférieure (13) et le réceptacle creux (11).

3. Dispositif de chauffage électrique selon la revendication 1, comprenant en outre une colle conductrice thermique d'isolation (50), le composant de chauffage thermique (21) étant collé au composant conducteur de chaleur (22) via la colle conductrice thermique d'isolation (50).

4. Dispositif de chauffage électrique selon la revendication 3, comprenant en outre une colle conductrice thermiquement (40), le composant de chauffage PTC (21) incluant au moins une unité de chauffage PTC (211), une paire de plaques d'électrode (212) étant collée à chaque côté de l'unité de chauffage PTC (211) via la plaque conductrice thermiquement (50) et une paire de plaques conductrices thermiquement d'isolation (213) étant collées à la paire de plaques d'électrode (212) via la colle conductrice thermiquement d'isolation (40), respectivement.

5. Dispositif de chauffage électrique selon la revendication 4, comprenant en outre un connecteur (60) venant en prise dans la fente (111) et recouvrant une extrémité du composant de chauffage PTC (21) près de la fente (111) et raccordant électriquement chacune de la paire de plaques d'électrode (212).

6. Dispositif de chauffage électrique (100) ayant un module de chauffage enfichable, comprenant :
- une alimentation de liquide (70) incluant du liquide (74), une pompe (71), un tuyau d'entrée (72) et un tuyau de sortie (73) raccordant à la pompe (71) ; et
- un dispositif de chauffage électrique (1) selon une quelconque des revendications précédentes.

7. Equipement de chauffage électrique (100) selon la revendication 6, dans lequel le composant conducteur de chaleur (22b, 22c) inclut un carter supérieure (221) et un carter inférieur (222), une surface du carter supérieure (221) est formée en d'un mur porteur supérieur en forme de U (2211) construit par trois côtés, une surface du carter inférieur (222) est formée par un mur porteur en forme de U (2221) construit par trois côtés, et le mur porteur supérieur (2211) raccorde le mur porteur inférieur (2221).

8. Equipement de chauffage électrique (100) selon la revendication 7, dans lequel deux côtés opposés du mur porteur supérieur (2211) sont formés avec un crochet supérieur (2212) recourbé vers l'intérieur, deux côtés opposés du mur porteur inférieur (2221) sont formés avec un crochet inférieur (2222) recourbé vers l'extérieur, et chaque crochet supérieur (2212) et chaque crochet inférieur (2222) se bouclent l'un dans l'autre.

9. Equipement de chauffage électrique (100) selon la revendication 7, dans lequel le composant conducteur de chaleur (22c) inclut en outre un objet de ruban (223) ayant une section transversale en forme de H formée avec une piste supérieure (2231) et une piste inférieure (2231') pour le mur porteur supérieur (2211) et le mur porteur inférieur (2221) venant en prise par coulissement dans celui-ci, respectivement.
